Europäisches Patentamt

European Patent Office

Office européen des brevets

(11) Numéro de publication: **0 362 456**
**A1**

## (12) DEMANDE DE BREVET EUROPEEN

(21) Numéro de dépôt: **88810682.0**

(22) Date de dépôt: **03.10.88**

(51) Int. Cl.⁵: **F16F 7/08**

(43) Date de publication de la demande:
**11.04.90 Bulletin 90/15**

(84) Etats contractants désignés:
**AT BE CH DE ES FR GB GR IT LI LU NL SE**

(71) Demandeur: **LUIGI FORTUNA & C. S.N.C.**
**Corso delle Province, 36**
**I-95100 Catania(IT)**

(72) Inventeur: **Quayzin, Sylvia**
**12, rue Crespin**
**CH-1206 Genève(CH)**

(74) Mandataire: **Meylan, Robert Maurice**
**c/o BUGNION S.A. 10, route de Florissant**
**Case Postale 375**
**CH-1211 Genève 12 - Champel(CH)**

(54) **Dispositif élastique non oscillant.**

(57) Le dispositif est constitué d'un ressort (30) monté entre deux flasques (31, 32). Le flasque supérieur (31) est muni d'une tige verticale (33) engagée dans une pince (34, 35) solidaire du flasque inférieur (32). Lors de la compression du ressort la pince s'ouvre en laissant descendre librement la tige (33), tandis qu'elle se referme lors de la décompression du ressort, en freinant la tige (33).

Fig.1

EP 0 362 456 A1

## Dispositif élastique non oscillant.

La présente invention a pour objet un dispositif élastique non oscillant comprend un ressort travaillant en compression.

Il est bien connu d'amortir l'oscillation d'un ressort au moyen d'un piston se déplaçant dans un fluide, généralement une huile spéciale. C'est le cas des amortisseurs de véhicules. Ces amortisseurs nécessitent un enceinte étanche et sont relativement coûteux.

La présente invention a pour but de réaliser un dispositif élastique non oscillant aussi simple que possible, n'utilisant pas de fluide et supprimant par conséquent les problèmes d'étanchéité.

Le dispositif élastique non oscillant selon l'invention est caractérisé par le fait que le ressort est monté entre deux flasques dont l'un est solidaire d'une tige axiale de guidage et l'autre comporte une pince verticale dans laquelle est pincée la tige, les deux doigts de la pince étant respectivement solidaires de deux bras sensiblement perpendiculaires à l'axe du ressort et sur lesquels s'appuie le ressort, de telle manière que la compression du ressort a pour effet d'ouvrir la pince, celle-ci se refermant lors de la relaxation du ressort en freinant la tige.

Selon une exécution particulièrement avantageuse, la pince et ses deux bras sont venus d'une seule pièce en matière synthétique, avec le flasque correspondant.

Le dessin annexé représente, à titre d'exemple, deux formes d'exécution de l'invention.

La figure 1 est une vue en perspective et partiellement en coupe d'une première forme d'exécution.

La figure 2 est une vue partielle, en perspective, d'une seconde forme d'exécution.

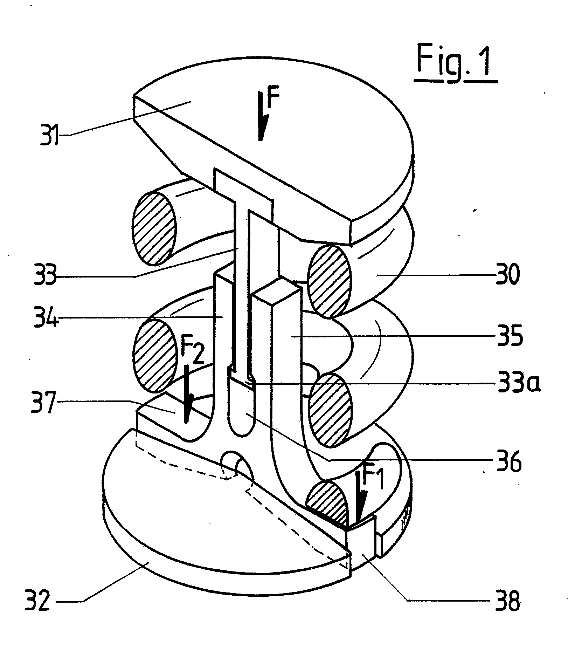

Selon la première forme d'exécution, représentée à la figure 1, le ressort 30 est monté entre deux flasques 31 et 32 de préférence en matière synthétique. Le flasque 31 est muni d'une tige verticale 33 de section rectangulaire, en matériau de friction, présentant un arrêt en forme d'élargissement 33a à son extrémité. Le flasque 32 présente un socle vertical fendu verticalement de manière à former deux bras 34 et 35 qui sont appuyés l'un contre l'autre en l'absence de la tige 33 pincée entre ces deux bras. L'élargissement 33a de la tige 33 prend place dans un dégagement 36 dans la partie inférieure de la fente. Les bras 34 et 35 se prolongent dans l'épaisseur du flasque 32 selon deux bras sensiblement horizontaux 37 et 38 formant une surépaisseur dans le flasque 32. Le ressort 30 s'appuie sur ces bras 37 et 38.

Lorsqu'une force F est exercée sur le flasque supérieur 31, le ressort 30 est comprimé et deux forces f1, f2 sont exercées par le ressort sur les extrémités des bras 37 et 38, ce qui a pour effet d'ouvrir la pince formée par les bras verticaux 34 et 35, de telle sorte que la tige 33 peut descendre librement. Par contre, lorsque la pression F cesse, le ressort est en relaxation et les forces f1, f2 s'annulent, de telle sorte que la pince 34/35 se referme sur la tige 33, celle-ci étant freinée. La course vers le haut de la tige 33 est limitée par son arrêt 33a, sans lequel le flasque 31 s'échapperait du dispositif.

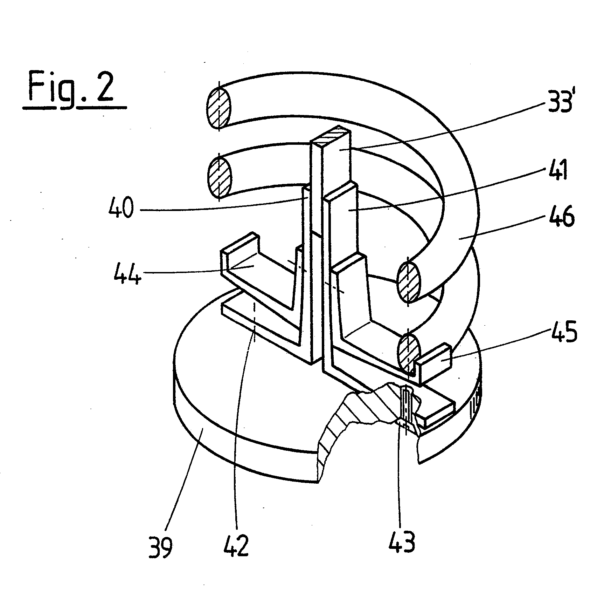

La seconde forme d'exécution, représentée partiellement à la figure 2, comprend également un flasque inférieur 39 et un flasque supérieur non représenté, analogue au flasque 31 de la figure 1, et muni d'une tige analogue 33′. La pince est ici constituée de deux équerres en acier 40 et 41 fixés sur le flasque 39 par des vis 42 et 43. Sur les bras verticaux des équerres 40 et 41, à une faible distance du flasque 39, sont soudées deux équerres 44 et 45 d'étendant latéralement de chaque côté des équerres 40 et 41. Sur ces équerres 44 et 45 s'appuie un ressort 46 analogue au ressort 30. Les équerres 44 et 45 ne sont pas à la même hauteur de telle sorte que la spire inférieure du ressort 46 s'appuie, au repos, sur les deux équerres, de manière à éviter une torsion du dispositif. Les vis 42 et 43 permettent de régler la force de pincement de la pince et par conséquent la force de freinage. Lorsque le ressort 46 est comprimé, la pression sur les bras horizontaux des équerres 44 et 45 écarte élastiquement les bras verticaux des équerres 40 et 41, ce qui permet à la tige 33′ de descendre librement. Lorsque la pression sur le flasque supérieur disparaît, les équerres 40 et 41 referment et freinent la tige 33′. L'usure de la pince et de la tige 33′ peut être compensée par les vis 42 et 43 qui sont munies à cet effet d'une portée s'appuyant sur le flasque 39. Les équerres 44 et 45 pourraient être constituées de consoles.

## Revendications

1. Dispositif élastique non oscillant comprenant un ressort travaillant en compression, caractérisé par le fait que le ressort (30; 50) est monté entre deux flasques (31, 32; 39) dont l'un est solidaire d'une tige axiale de guidage (33; 33′) et l'autre comporte une pince verticale (34, 35; 44, 47) dans laquelle est pincée ladite tige, les deux doigts de la pince étant respectivement solidaires de deux bras (37, 38; 45, 48) sensiblement perpendiculaires à l'axe du ressort et sur lesquels s'appuie le ressort, de telle manière que la compression du ressort a pour effet d'ouvrir la pince, celle-ci se refermant lors de la relaxation du ressort.

2. Dispositif élastique selon la revendication 1, caractérisé par le fait que la pince et ses deux bras sont venus d'une seule pièce en matière synthétique (34, 35, 37, 38).

3. Dispositif élastique selon la revendication 2, caractérisé par le fait que la pince et ses deux bras sont en outre venus d'une seule pièce avec le flasque correspondant (32).

4. Dispositif élastique selon la revendication 1, caractérisé par le fait que la pince est constituée de deux pièces (40, 41) coudées à angle droit, articulées sur le flasque (39) et de deux équerres (44, 45) fixées sur les pièces coudées et sur lesquelles d'appuie le ressort (46).

5. Dispositif élastique selon la revendication 4, caractérisé par le fait que les pièces coudées à angle droit (40, 41) sont fixées sur le flasque inférieur (39) par des vis (42, 43) permettant de régler le pincement du dispositif.

Fig.1

Fig. 2

33'
41
46
45
40
44
39    42    43

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| A | DE-U-7 112 269 (WILLIAM)<br>* Revendication 1; figure 1 *<br>--- | 1,3 | F 16 F 7/08 |
| A | DE-A-3 626 065 (BAUER + SÖHNE)<br>* Colonne 5, lignes 33-50; figure 5 *<br>--- | 1 | |
| A | DE-A-2 549 102 (V.W.)<br>* Page 9, alinéa 2 - page 11, alinéa 3; figures 5-8 *<br>--- | 1,2 | |
| A | DE-A-2 237 648 (BRIDGESTONE)<br>* Page 2, alinéa 6 - page 4, alinéa 1; figure 1 *<br>--- | 1 | |
| A | FR-A- 350 745 (RIGNAULT)<br>* Page 2, résumé; figure 1 *<br>--- | 1 | |
| A | FR-A-1 308 208 (POULAT)<br>* Page 2, colonne de gauche, ligne 29 - colonne de droite, ligne 18; figures 2,3 *<br>--- | 1 | **DOMAINES TECHNIQUES RECHERCHES (Int. Cl.3)** |
| A | DE-A-2 360 907 (SIEMENS)<br>* Page 2, alinéa 5 - page 3, alinéa 1; figure 3 *<br>--- | 1-3 | F 16 F<br>B 60 G |
| A | DE-C-3 716 066 (NABINGER)<br>* En entier *<br>----- | 4,5 | |

Le présent rapport a été établi pour toutes les revendications

| Lieu de la recherche | Date d'achèvement de la recherche | Examinateur |
|---|---|---|
| LA HAYE | 22-05-1989 | MEIJS P.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)